(19) Europäisches Patentamt
European Patent Office
Office européen des brevets

(11) **EP 1 848 161 B1**

(12) **EUROPEAN PATENT SPECIFICATION**

(45) Date of publication and mention
of the grant of the patent:
**18.06.2008 Bulletin 2008/25**

(51) Int Cl.:
**H04L 12/56** *(2006.01)*

(21) Application number: **06300382.6**

(22) Date of filing: **20.04.2006**

(54) **Efficient method and system for weighted fair policing**

Verfahren und Vorrichtung für effiziente gewichtete und gerechte Datenüberwachung

Procédé et dispositif pour un contrôle équitable et pondéré efficace

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**24.10.2007 Bulletin 2007/43**

(73) Proprietor: **Alcatel Lucent**
**75008 Paris (FR)**

(72) Inventor: **Zeitak, Reuven**
**Rehovot (IL)**

(74) Representative: **Urlichs, Stefan**
**Alcatel Lucent**
**Intellectual Property & Standards**
**70430 Stuttgart (DE)**

(56) References cited:
**EP-A- 0 901 301     EP-A- 1 553 740**
**US-B1- 6 192 032**

**Description**

**Technical Field**

The present invention relates generally to communication networks, and more particularly to techniques for queuing data traffic in communication networks.

Access to and use of wireless networks is becoming increasingly important and popular for business, social, and recreational purposes. Users of wireless networks now rely on them for both voice and data communications. Furthermore, an ever increasing number of users demand both an increasing array of services and capabilities as well as greater bandwidth for activities such as Internet surfing. To address and meet the demands for new services and greater bandwidth, the wireless communications industry constantly strives to improve the number of services and the throughput of their wireless networks. Expanding and improving the infrastructure necessary to provide additional services and higher bandwidth is an expensive and manpower-intensive undertaking. Moreover, high-bandwidth data streams will eventually be demanded by consumers to support features such as real-time audio-visual downloads and live audio-visual communication between two or more people. In the future, it will therefore become necessary and/or more cost-effective to introduce next generation wireless system(s) instead of attempting to upgrade existing system(s).

To that end, the wireless communications industry intends to continue to improve the capabilities of the technology upon which it relies and that it makes available to its customers by deploying next generation system(s). Protocols for a next-generation standard that is designed to meet the developing needs of wireless customers is being standardized by the 3.sup.rd Generation Partnership Project (3GPP). The set of protocols is known collectively as the Universal Mobile Telecommunications System (UMTS).

In the current state of the Internet, the issues of guaranteed bandwidth fairness and support for multiple levels of latency are becoming increasingly important.

Guaranteed bandwidth fairness is typically provided using so called "Fair Queuing" algorithms. These algorithms guarantee that bandwidth of a certain link (or virtual link) is fairly apportioned among its various flows. Fair Queuing algorithms are incorporated into network systems using fair queuing (or bandwidth) schedulers. These schedulers seek to control congestion even in the presence of ill-behaved sources, so that a single source that sends packets to a gateway at a sufficiently high speed cannot capture an arbitrarily high portion of the bandwidth of the outgoing line. While providing bandwidth guarantees is important, it is also important that latency-critical traffic flows (such as Voice Over IP and Video) experience as low latency as possible. Prioritizing traffic flows so that latency-critical flows experience low latency is currently provided by priority (or latency) schedulers.

Conventional network solutions have attempted to resolve both fair queuing and priority scheduling, and, despite the inherent tension between the two concerns, have been somewhat successful in incorporating both features in network systems.

**Background of the Invention**

Weighted fair queuing (WFQ) is a well known flow-based queuing technique as for example disclosed in US 6810426 or US 6850540. The WFQ simultaneously schedules interactive traffic to the front of the queue to reduce response time and it fairly shares the remaining bandwidth between high bandwidth flows.

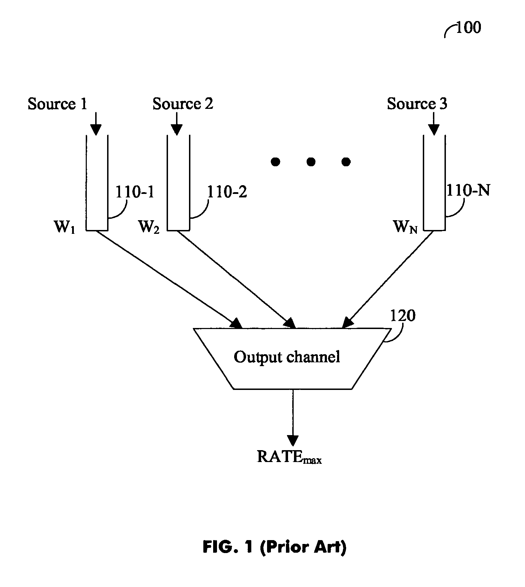

FIG. 1 shows in prior art a conventional WFQ system 100 that includes N queues 110-1 through 110-N. Each queue 110 serves a single source (or connection) and is assigned with a respective weight. Each packet leaving its respective queue 110 is forwarded directly to an output channel 120. The scheduling method implemented in WFQ system 100 ensures that the waiting time of packets in queues 110 is always in proportion to queue's weights.

For example, a WFQ system having three queues Q1, Q2, and Q3 and respectively assigned with the weights $W_1 = 5$, $W_2 = 2$, and $W_3 = 3$. The maximum allowable rate of the output channel is 10 MB/Sec. In this exemplary system, if all queues have packets waiting, then Q2 and Q3 receive a guaranteed bandwidth of 2 and 3 MB/Sec respectively, and Q1 receives a guaranteed bandwidth of 5 MB/sec. If Q1 does not have any packets waiting, then the excess bandwidth is equal to 5 MBS/second. In a WFQ system, this excess bandwidth is redistributed in proportion to the associated weights of the queues that have packets waiting. That is, when queue Q1 does not have packets waiting, the excess bandwidth is distributed proportionally to queues Q2 and Q3 so that they now receive bandwidth of 4 and 6 MB/Sec respectively.

One advantage of the WFQ technique is the end-to-end delay guarantees, i.e., each packet is guaranteed a certain rate for each packet flow in the stream. Another advantage is the underutilization of capacity when flow is particularly bursty idle time. In such case the WFQ technique facilitates the redistribution of the unused bandwidth so as to preserve work-conservation property.

US 6192032 B1 describes a video frame transmitter with a traffic smoother for adjusting the video frame packet transmission rates, a traffic policing device for controlling video frame packet entry into the network and a transmission rate attenuator, which provides a mechanism for the policing device to work in conjunction with the traffic smoother. Typically, a policing device and a traffic smoother operate independently causing packet priority downgrades. According to the teaching of US 6192032 B1, by reducing the transmission rate of a video frame, a policing device is allowed to create more tokens so that all packets within the video frame are transmitted without any priority downgrades.

## Summary of the Invention

The drawback of the WFQ technique inherits in its implementation. The conventional WFQ systems are based on multiple queues, this configuration is costly and complicated. Furthermore, queue based system requires to maintain the state of each packet. This requirement is not compliant with most of the communication networks. It would be therefore advantageous to provide an efficient weighted fairness bandwidth distribution system.
These and other objects that appear below are achieved by a fair policing method according to claim 1 and by a weighted fair policing (WFP) system according to claim 5. Advantageous improvements are described in the dependent claims.

## Brief Description of the Drawings

Figure 1 - is a conventional WFQ system (prior art)

Figure 2 - is a non-limiting an exemplary block diagram of an efficient weighted fairness system that discloses one embodiment of the present invention

Figure 3 - is a non-limiting and exemplary graph of an attenuation function

Figure 4 - is an example for the operation the disclosed weighted fairness system

Figure 5 - is a non-limiting flowchart describing method for performing a weighted fair policing that discloses on embodiment of the present invention

Figure 6 - is a non-limiting an exemplary diagram of an efficient weighted fair policing system having prioritized queues that discloses one embodiment of the present invention

## Detailed Description of the Invention

The present invention discloses an efficient weighted fair policing (WFP) system capable of weighted fairness bandwidth distribution. The system is based on a plurality of policers and a single queue. To achieve fairness, the rate of policed packets is adaptively controlled.

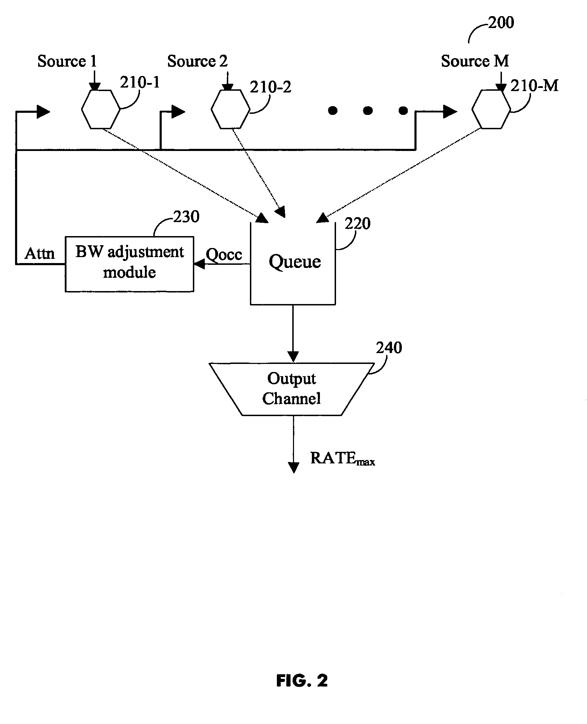

Fig. 2 shows a non-limiting and an exemplary block diagram of a WFP system 200 that discloses one embodiment of the present invention. WFP system 200 includes M policers 210-1 through 210-M connected to a single queue 220, a bandwidth adjustment module 230, and an output channel 240. Each policer 210 is parameterized by an input rate (In Rate) and a maximum excess information rate ($EIR_{max}$). A policer is a rate limiting device that rejects data packets that arrive to the policer at a instantaneous rate that is above some predefined threshold rate. Specifically, each policer 210 is capable of handling a single data flow and computing a new EIR to be enforced. Namely, packets of a respective data flow are transferred from a policer 210 to queue 220 if their instantaneous rate does not exceed the rate equal to the newly computed EIR. The new EIR is computed according to the following equation:

$$EIR_{new} = Attn * EIR_{max}; \qquad (1)$$

]
where the "Attn" parameter is determined by an attenuation function, as described in more detail below. The $EIR_{max}$ is the maximum bandwidth that a policer can transfer. In fact, the $EIR_{max}$ are preconfigured values that determine the weighs of the WFP algorithm. Data packets flowing through the policer cannot exceed InRate. An example for a policer 210 may be found in PCT application No. PCT/112004/00781 by Zeitak, entitled "A Policer and Method for Resource Bundling", assigned to a common assignee and hereby incorporated by reference for all that it contains.
The output rate of output channel 240 is determined by a maximum allowable rate (hereinafter the "$RATE_{max}$")

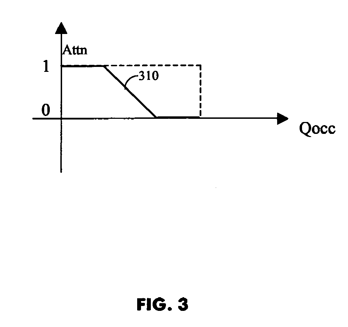

parameter. Congestion occurs whenever the total rate that the policers 210 allow is in excess of the $RATE_{max}$. The bandwidth adjustment module 230 monitors the queue occupancy and queue ingress rate (hereinafter the "Qocc") and computes an Attn value using the attenuation function. Fig. 3 shows a non-limiting and exemplary graph of an attenuation function 310. As seen, the Attn value ranges between 0 and 1, where a 1 value is when queue 220 is empty and a 0 value is when the queue 220 is full. The Attn value is sent to each of policers 210, which in turn calculates the $EIR_{new}$ to be enforced. An exemplary embodiment of the attenuation function (AT) would be:

$$AT(Qocc) = \begin{cases} 1; if Qocc < Th1 [changed] \\ 0; if Qocc > Th2 \\ \dfrac{Th2 - Qocc}{Th2 - Th1}; if Th < Qocc < Th2 \end{cases} \qquad (2)$$

where, Th2 is a normalization factor that determines the maximum occupancy (in bytes) of the queue and Th1 is a threshold equals to $\alpha*$Th2. The parameter $\alpha$ is configurable and an exemplary embodiment is set to a 0.6.

It should be appreciated by a person skilled in the art that policers are based on bandwidth, hence they cannot emulate a weight fair queuing. However, by utilizing the queue occupancy to adaptively and directly control the bandwidth of each policer, ensures fairness in respect to the maximum allowable rate. That is, by controlling the policer's bandwidth, a source transmitting at a rate that is lower than its $EIR_{max}$ may continue to deliver undistributed traffic; otherwise, the $EIR_{max}$ is reduced.

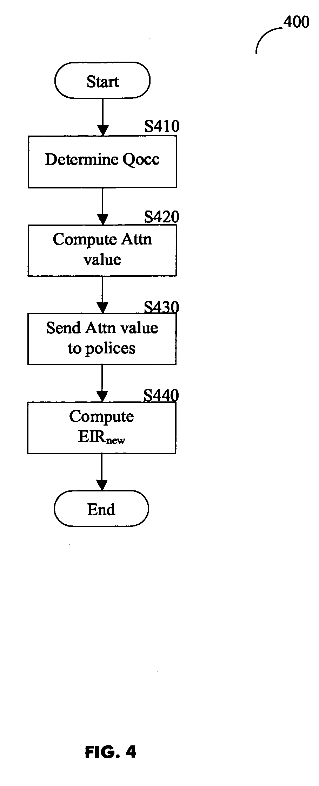

Fig. 4 shows a non-limiting flowchart 400 describing method for performing a weighted fair queuing that discloses one embodiment of the present invention. The method applies only when congestion is detected. At S410, the Qocc value of queue 220 is determined. In one embodiment the Qocc is computed as the average depth of the queue and over time. This is performed by measuring the number of stored bytes in the queue each time that a packet is inserted or removed from the queue. Averaging the queue depth provides a stable value of the Qocc. At S420, the Attn value is computed using the Qocc based on attenuation function. The Attn value may be computed using equation 2. The inventor notes that the Attn value may be slightly varied until it reaches its equilibrium point. This point is achieved when the following equation is satisfied:

$$RATE_{max} = \sum_{policers} \min(InRate, Attn * EIR_{max}). \qquad (3)$$

Alternatively, in the case of no congestion the equilibrium point when the following equation is satisfied:

$$RATE_{max} < \sum_{policers} \min(InRate, EIR_{max}). \qquad (4)$$

At S430, the Attn value is sent to each of policers 210. The Attn value is used for computing and enforcing the $EIR_{new}$ on incoming packets as shown at S440. The $EIR_{new}$ may be computed using equation 1.

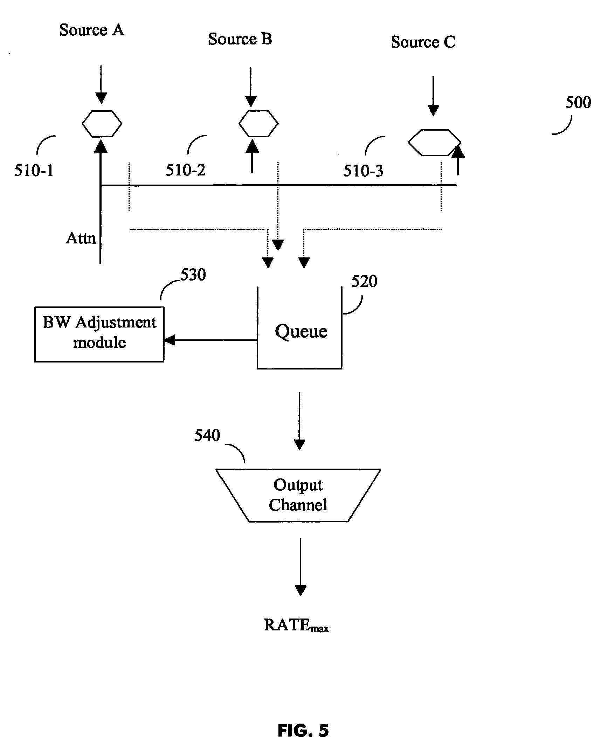

Following is a non-limiting example describing the weighted fair queuing performed by the present invention. Fig. 5 shows an exemplary WFP system 500 that includes three policers 510-1, 510-2, and 510-3 connected to a queue 520. Each of policers 510-1, 510-2, and 510-3 is configured with an $EIR_{max}$ value that equals, for example, to 30MB/Sec. A source A transmits packets through policer 510-1 at a rate that equals, for example, to 10MB/Sec; a source B transmits packets through policer 510-2 at a rate that equals to, for example, 20MB/Sec; and, the output rate of source C is, for example, 30MB/Sec. The $RATE_{max}$ of output channel 540 is, for example, 30MB/Sec. It is clear that in such exemplary configuration congestion occurs.

To fairly schedule packets of the input sources, the Attn value in computed. In the example above the equilibrium point is achieved when the Attn value is 1/3. This value is sent to policers 510-1, 510-2 and 510-3 that computes the $EIR_{new}$ values. The computed $EIR_{new}$ value of all policers 510-1, 510-2, and 510-3 equals to 10MB/Sec. Policers 510 cannot transmit packets at a rate that exceeds the computed $EIR_{new}$, and therefore the policers together cannot deliver packets at a rate that is above $RATE_{max}$.

It should be noted that the Attn is adaptively changed according to traffic rates of the input sources. For instance, if source A stops transmitting packets then the depth of queue 520 reduces and therefore a new Attn value is generated. Here, the equilibrium is achieved when Attn value equals to 1/2. Accordingly, the $EIR_{new}$ values of policers 510-1 and 510-2 are set to 10MB/Sec.

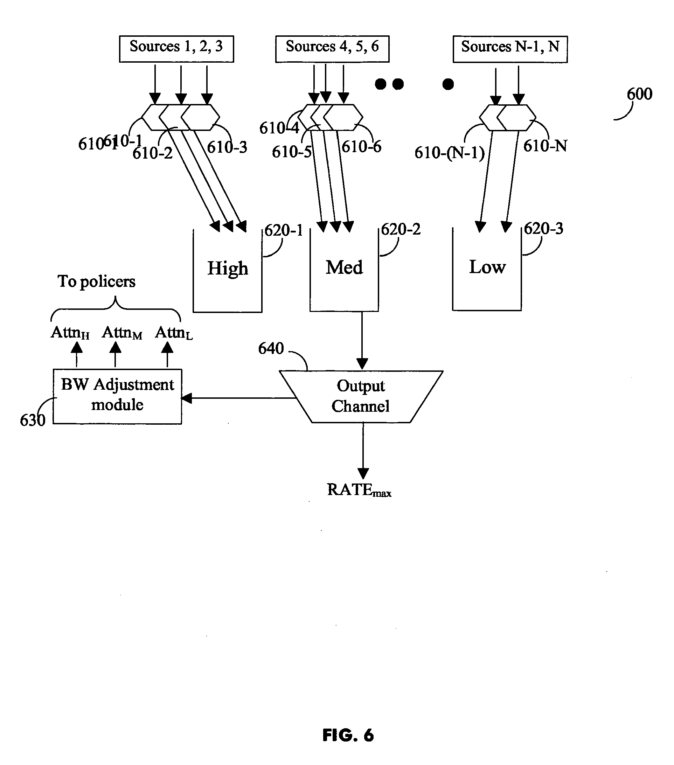

In another embodiment of the present invention the principles of WFP technique disclosed herein can be utilized in systems having a plurality of queues, where each queue has its own priority. Fig. 6 shows an exemplary system 600 that includes N policers 610-1 through 610-N connected to queues 620-1, 620-2, and 620-3. The priorities assign to queue 620-1, 620-2, and 620-3 are high, low, and medium respectively. The priory determines the waiting time of packets in a queue, i.e., packets in a high priory queue are queued for relatively less time than packets in a low priority queue. In this embodiment, a different attenuation function is associated with each queue. The Attn function of low priory queue 620-3 ($AT_L$) is based on the Qocc of that queue, i.e., $AT_L = F[Qocc_L]$. The Attn function of medium priory queue 620-2 ($AT_M$) is based on the Qocc of that queue ($Qocc_M$) and on the occupation of CIR bytes QoccLC in the low priory queue 620-3, i.e., $AT_M = F[Qocc_M, QoccLC]$. The Attn function of high priory queue 620-1 ($AT_M$) is based on the Qocc of queue 620-1 as well as on the occupation of CIR bytes QoccLC in the the low priory queue 620-3 and the occupation of CIR bytes QoccMC in) the medium priory queue 620-3, i.e., $AT_M = F[Qocc_M, QoccMC, QoccLC]$. The use of the CIR occupation values of lower priority queues to set the value of higher priority queues is performed in order to deliver packets having a committed information rate (CIR) from lower priority queues. In fact, the Qocc_C of the low and medium priority queues is a function of the number of CIR bytes in the respective queue.

**Claims**

1. A method for fairly distributing bandwidth of a plurality of data flows by performing a weighted fair policing, said method comprises the steps of:

   - receiving at a queue structure a plurality of data packets coming from multiple sources,

   **characterized in that** the queue structure (200) comprises a plurality of policers (210) connected to one data queue (220), wherein each of said policers (210) is capable of handling a single data flow from a single source and each of said policers has assigned a respective excess information rate (EIR) to be enforced;
   said method being further **characterized by** the steps of:

   - computing an attenuation (Attn) value for said queue (220), said attenuation value determines current congestions for the policers (210) to said queue (220); and
   - adoptively changing the excess information rates (EIR) of said policers (210) using said attenuation value.

2. The method of claim 1, wherein computing said Attn value further comprises the step of:

   monitoring occupancy of a queue; and
   using the queue occupancy and an attenuation function for determining said attenuation value.

3. The method of claim 2, wherein monitoring the queue occupancy comprises:

   measuring an average depth of the queue.

4. The method of claim 1, wherein adaptively changing said EIR further comprises:

   receiving said attenuation value at a plurality of policers (210); and
   by each of said plurality of policers, computing a new EIR value to be enforced.

5. A weighted fair policing system for fairly distributing bandwidth of a plurality of data flows in a communication network, said weighted fair policing system comprises:

   a plurality of policers (210), each of said policers (210) is capable of adaptively changing an excess information rate to be enforced, wherein the plurality of policers (210) are connected to a single queue (220);
   said plurality of policers (210) being capable to be coupled to different sources, wherein each of said policers (210) is capable of handling a single data flow from a single source and each of said plurality of sources is assigned with a different priority; and
a bandwidth adjustment module (230) coupled to said queue (220) and said plurality of policers (210), said bandwidth adjustment (230) module is capable of computing an attenuation (Attn) value for said queue (220) which determines current congestions for the policers (210) to said queue (220); wherein said policers (210) are adapted to adoptively change their excess information rates (EIR) using said attenuation value (Attn).

6. The WFP system of claim 5, wherein the Attn value of a higher priority queue is based at least on the Attn value of a lower priority queue.

7. The WFP system of claim 5, wherein said Attn value is a function of a number of committed information rate (CIR) packets in a respective queue.

8. The WFP system of claim 5, wherein the EIR of each of said plurality of policers is changed in a linear proportion to said Attn value.

**Patentansprüche**

1. Ein Verfahren zur gerechten Verteilung von Bandbreiten einer Vielzahl von Datenflüssen durch Ausführen einer gewichteten und gerechten Datenüberwachung, wobei das Verfahren folgende Schritte umfasst:

   - Empfangen an einer Warteschlangenstruktur von einer Vielzahl von Datenpaketen, welche von mehreren Quellen kommen.

   **dadurch gekennzeichnet, dass** die Warteschlangenstruktur (200) eine Vielzahl von Überwachern (210), welche mit einer Daten-Warteschlange (220) verknüpft sind, umfasst, wobei ein jeder der besagten Überwacher (210) fähig ist, einen bestimmten Datenfluss von einer bestimmten Quelle zu verarbeiten und einem jeden der besagten Überwacher eine entsprechende Datenüberschussrate (EIR) zugewiesen ist, welche anzuwenden ist;
   wobei das Verfahren weiterhin durch folgende Schritte **gekennzeichnet** ist:

   - Berechnen eines Abschwächungs-(Attn)-Werts für die besagte Warteschlange (220), wobei der besagte Abschwächungswert bestehende Staus für die Überwacher (210) der besagten Warteschlange (220) bestimmt; und
   - Adaptives Ändern der Datenüberschussrate (EIR) der besagten Überwacher (210), welche den besagten Abschwächungswert benutzen.

2. Das Verfahren nach Anspruch 1, wobei das Berechnen des besagten Attn-Wertes folgenden Schritt umfasst:

   Überwachen der Belegung einer Warteschlange; und
   Benutzen der Warteschlangenbelegung sowie einer Abschwächungsfunktion zum Bestimmen des besagten Abschwächungswerts.

3. Das Verfahren nach Anspruch 2, wobei das Überwachen der Warteschlangenbelegung umfasst:

   Messen einer durchschnittlichen Tiefe der Warteschlange.

4. Das Verfahren nach Anspruch 1, wobei das adaptive Ändern der besagten EIR weiterhin umfasst:

   Empfangen des besagten Abschwächungswerts an einer Vielzahl von Überwachern (210); und
   Durch einen jeden der besagten Vielzahl von Überwachern, Berechnen eines neuen EIR-Wertes, der anzuwenden ist.

5. Ein gewichtetes, gerechtes Überwachungssystem für das gerechte Verteilen von Bandbreiten einer Vielzahl von Datenflüssen in einem Kommunikationsnetz, wobei das gerechte Überwachungssystem umfasst:

   Eine Vielzahl von Überwachern (210), wobei jeder der besagten Überwacher (210) fähig ist, eine anzuwendende Datenüberschussrate adaptiv zu ändern, wobei die Vielzahl von Überwachern (210) mit einer bestimmten Warteschlange (220) verknüpft sind;
   Wobei die besagte Vielzahl von Überwachern (210) fähig sind, an verschiedene Quellen gekoppelt zu werden, wobei jeder der besagten Überwacher (210) fähig ist, einen bestimmten Datenfluss von einer bestimmten Quelle zu verarbeiten, und jeder der besagten Vielzahl von Quellen ist eine unterschiedliche Priorität zugewiesen ist; und Ein an die besagte Warteschlange (220) und an die besagte Vielzahl von Überwachern (210) gekoppeltes Bandbreitenanpassungsmodul (230), wobei das besagte Bandbreitenmodul (230) fähig ist, einen Abschwächungs-(Attn)-Wert für die besagte Warteschlange (220) zu berechnen, welcher bestehend Staus für die Überwacher (210) der besagten Warteschlange (220) ermittelt; wobei die besagten Überwacher (210) fähig sind, ihre Datenüberschussraten (EIR) durch Anwenden des besagten Abschwächungswerts (Attn) adaptiv zu ändern.

6. Das WFP-System nach Anspruch 5, wobei der Attn-Wert einer Warteschlange mit höherer Priorität mindestens auf dem Attn-Wert einer Warteschlange mit niedrigerer Priorität basiert.

7. Das WFP-System nach Anspruch 5, wobei der Attn-Wert von der Anzahl der Pakete mit garantierter Übertragungsgeschwindigkeit (CIR) in einer entsprechenden Warteschlange abhängig ist.

8. Das WFP-System nach Anspruch 5, wobei die EIR eines jeden der besagten Vielzahl von Überwachern in einem linearen Verhältnis zu dem besagten Attn-Wert geändert wird.

**Revendications**

1. Procédé destiné à répartir équitablement la bande passante d'une pluralité de flots de données en effectuant un contrôle équitable et pondéré, ledit procédé comprenant les étapes suivantes :

    - recevoir au niveau d'une structure de file d'attente une pluralité de paquets de données venant de sources multiples,

    **caractérisé en ce que** la structure de file d'attente (200) comprend une pluralité de contrôleurs (210) reliés à une file d'attente de données (220), dans lequel chacun desdits contrôleurs (210) est capable de traiter un flot de données unique venant d'une source unique et un débit maximum autorisé respectif (EIR) à appliquer est affecté à chacun desdits contrôleurs ;
    ledit procédé étant en outre **caractérisé par** les étapes suivantes :

    - calculer une valeur d'affaiblissement (Attn) pour ladite file d'attente (220), ladite valeur d'affaiblissement détermine les congestions en cours pour les contrôleurs (210) de ladite file d'attente (220) ; et
    - changer de manière adaptative les débits maximums autorisés (EIR) desdits contrôleurs (210) en utilisant ladite valeur d'affaiblissement.

2. Procédé selon la revendication 1, dans lequel le calcul de ladite valeur Attn comprend en outre l'étape suivante :

    contrôler le niveau d'utilisation d'une file d'attente ; et
    utiliser le niveau d'utilisation de la file d'attente et une fonction d'affaiblissement pour déterminer ladite valeur d'affaiblissement.

3. Procédé selon la revendication 2, dans lequel le contrôle du niveau d'utilisation de la file d'attente comprend l'étape suivante :

    mesurer une profondeur moyenne de la file d'attente.

4. Procédé selon la revendication 1, dans lequel le changement de manière adaptative dudit EIR comprend en outre les étapes suivantes :

    recevoir ladite valeur d'affaiblissement au niveau d'une pluralité de contrôleurs (210) ; et
    par chacun de ladite pluralité de contrôleurs, calculer une nouvelle valeur EIR à appliquer.

5. Système de contrôle équitable et pondéré destiné à répartir équitablement la bande passante d'une pluralité de flots de données dans un réseau de communication, ledit système de contrôle équitable et pondéré comprend :

une pluralité de contrôleurs (210), chacun desdits contrôleurs (210) est capable de changer de manière adaptative un débit maximum autorisé à appliquer, dans lequel la pluralité de contrôleurs (210) sont reliés à une file d'attente unique (220) ;

ladite pluralité de contrôleurs (210) étant capable d'être couplés aux différentes sources, dans lequel chacun desdits contrôleurs (210) est capable de traiter un flot de données unique venant d'une source unique et une priorité différente est affectée à chacune de ladite pluralité de sources ; et

un module de réglage de la bande passante (230) couplé à ladite file d'attente (220) et à ladite pluralité de contrôleurs (220), ledit module de réglage de la bande passante (230) est capable de calculer une valeur d'affaiblissement (Attn) pour ladite file d'attente (220) qui détermine les congestions en cours pour les contrôleurs (210) de ladite file d'attente (220) ; dans lequel lesdits contrôleurs (210) sont capables de changer de manière adaptative leurs débits maximums autorisés (EIR) en utilisant ladite valeur d'affaiblissement (Attn).

6. Système WFP selon la revendication 5, dans lequel la valeur Attn d'une file d'attente de priorité supérieure est basée au moins sur la valeur Attn d'une file d'attente de priorité inférieure.

7. Système WFP selon la revendication 5, dans lequel ladite valeur Attn est fonction d'un certain nombre de paquets de débit maximum garanti (CIR) dans une file d'attente respective.

8. Système WFP selon la revendication 5, dans lequel l'EIR de chacun de ladite pluralité de contrôleurs est changé dans une proportion linéaire par rapport à ladite valeur Attn.

$\curvearrowright 100$

Source 1   Source 2                    Source 3

110-1       110-2          • • •       110-N

$W_1$       $W_2$                      $W_N$

120

Output channel

$RATE_{max}$

**FIG. 1 (Prior Art)**

**FIG. 2**

**FIG. 3**

FIG. 4

Source A        Source B        Source C

500

510-1        510-2        510-3

Attn

530        520

BW Adjustment
module        ←        Queue

540

Output
Channel

RATE$_{max}$

FIG. 5

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6810426 B
- US 6850540 B

- US 6192032 B1